Europäisches Patentamt

European Patent Office

Office européen des brevets

(19)

(11) Veröffentlichungsnummer : **0 170 042**
**B1**

(12) **EUROPÄISCHE PATENTSCHRIFT**

(45) Veröffentlichungstag der Patentschrift :
11.10.89

(21) Anmeldenummer : 85107755.2

(22) Anmeldetag : 22.06.85

(51) Int. Cl.⁴ : **F 16 L 47/00**, F 16 L 19/02

(54) Kupplung.

(30) Priorität : 19.07.84 DE 3426574

(43) Veröffentlichungstag der Anmeldung :
05.02.86 Patentblatt 86/06

(45) Bekanntmachung des Hinweises auf die Patenterteilung : 11.10.89 Patentblatt 89/41

(84) Benannte Vertragsstaaten :
AT BE CH DE FR GB IT LI LU NL SE

(56) Entgegenhaltungen :
CH-A- 411 489
FR-A- 2 396 915
US-A- 3 484 123

(73) Patentinhaber : GARDENA Kress + Kastner GmbH
Lichternseestrasse 40 Postfach 27 47
D-7900 Ulm (Donau) (DE)

(72) Erfinder : Die Erfinder haben auf ihre Nennung
verzichtet

(74) Vertreter : Patentanwälte Ruff und Beier
Neckarstrasse 50
D-7000 Stuttgart 1 (DE)

## Beschreibung

Die Erfindung betrifft eine Kupplungsbuchse nach dem Oberbegriff des Anspruchs 1 sowie einen Kupplungsnippel nach dem Oberbegriff des Anspruchs 13.

Beispiele derartiger Geräte sind Waschbürsten, die einen hohlen Stiel aufweisen, durch dessen Inneres Wasser zugeführt werden soll. Ein anderes Beispiel ist eine spezielle Spritze zur Abgabe von Wasser. Diese Geräte sollen mit einem Stiel verbunden werden, durch dessen Inneres das Wasser strömt. Der Stiel dient also gleichzeitig zur Zufuhr von Wasser und als Halterung, so daß Kupplungseinrichtungen, bestehend aus Kupplung und Nippel, nicht nur Dreh- und Biegekräfte übertragen müssen, sondern auch flüssigkeitsdicht miteinander verbunden werden müssen.

Es ist bereits eine lösbare Verbindung für zwei aus Kunststoff bestehende Ablaufrohre bekannt (CH-A-411 489), bei der das eine Rohr in das zweite Rohrende hineingesteckt wird. Das zweite Rohrende wird mit Hilfe einer auf es aufgeschraubten Mutter nach innen verpreßt, so daß das freie Ende des Rohres an dem ersten Rohr anliegt.

Der Erfindung liegt die Aufgabe zugrunde, eine Kupplung dieser Art zu schaffen, die sowohl im Hinblick auf flüssigkeitsdichte Verbindung als auch zur Übertragung der auftretenden Kräfte und Momente besonders geeignet ist.

Zur Lösung dieser Aufgabe ist erfindungsgemäß vorgesehen, daß die Kupplungsbuchse an ihrer Innenseite eine Auflagefläche für eine Dichtung und eine im Bereich ihres freien Endes angeordnete Verdrehsicherung für den mit ihr zu verbindenden Kupplungsnippel aufweist, und die Anlagefläche etwa auf einer zum freien Ende der Kupplung sich öffnenden Kegelstumpffläche liegt und in axialem Abstand vom freien Ende der Kupplungsbuchse angeordnet ist. Durch die Trennung der einzelnen zur Verbindung der Hülse mit dem Nippel erforderlichen Teile wird dafür gesorgt, daß die einzelnen Teile speziell an ihre Aufgabe angepaßt werden können. So dient die Verdrehsicherung ausschließlich der Sicherung gegen Verdrehung, während die etwa trichterförmige Anlagefläche zur Anlage eines Teiles des Nippels dient, der mit Hilfe des Gewindes angeschraubt und gegen die Anlagefläche gedrückt wird. Dadurch erfolgt eine Zentrierung des Nippels, so daß die Biegemomente an dieser Anlagefläche aufgenommen werden können, während die Verdrehung durch die Verdrehsicherung verhindert wird. Die kegelstumpfförmige Ausbildung der Anlagefläche dient dazu, eine exakte Zentrierung und damit eine spielfreie Halterung der Hülse und des Nippels zu gewährleisten, auch wenn zwischen beiden in radialer Richtung ein Spiel vorhanden ist. Die räumliche Trennung der Anlagefläche von der Verdrehsicherung trägt weiter zur Stabilität der Kupplung bei. Durch den Abstand zwischen der Anlagefläche und dem freien Ende der Kupplungshülse wird ein maximaler Abstand zwischen Anlagefläche und Verdrehsicherung geschaffen, so daß der Nippel an zwei weit voneinander entfernten Stellen gehaltert wird, so daß die auftretenden Biegemomente besonders günstig aufgefangen werden können. Insbesondere kann vorgesehen sein, daß die Kupplungsbuchse einstückig mit dem zu einem wasserverbrauchenden Gerät führenden Rohr ausgebildet ist.

In Weiterbildung kann vorgesehen sein, daß die Auflagefläche zur Anlage einer Dichtung im Bereich des freien Endes der Kupplungsbuchse vor der Verdrehsicherung angeordnet ist. Damit wird weiterhin dafür gesorgt, daß die flüssigkeitsdichte Abdichtung der Kupplung unabhängig von der Aufnahme des Biegemomentes und der Verdrehung ist, wobei die Auflagefläche vorzugsweise eine Zylinderfläche ist, so daß bei mehr oder weniger starkem Anschrauben des Nippels an die konische Anlagefläche immer eine gute Abdichtung gewährleistet ist.

In Weiterbildung kann vorgesehen sein, daß die Kupplungsbuchse aus Kunststoff besteht bzw. eine aus Kunststoff bestehende Hülse aufweist, an der die Verdrehsicherung einstückig angeformt sein kann. Nach der Erfindung kann die mindestens eine Anlagefläche einstückig mit der Kunststoffhülse der Kupplungsbuchse ausgebildet sein. Dies ist insbesondere dann von Vorteil, wenn die Kupplungsbuchse direkt mit dem wasserverbrauchenden Gerät verbunden ist, also beispielsweise mit geringem Abstand von diesem. Es kann weiterhin vorgesehen sein, daß mehrere gleichmäßig über den Umfang verteilte Anlageflächen vorgesehen sind, die an Rippen gebildet sind. In diesem Fall liegt der Nippel an einer relativ großen Fläche an, die gleichmäßig über den Umfang verteilt angeordnet ist. Die Herstellung ist besonders einfach, da sich die Rippen an der Innenseite der Kunststoffhülse besonders einfach herstellen lassen. Die Rippen können dabei zusätzlich zur Verstärkung der Kunststoffhülse dienen, da sie auch in dem von der Anlagefläche beabstandeten Bereich vorhanden sein können und dort eine gewisse Führung für den Nippel übernehmen können.

Besonders günstig ist es jedoch, wenn die Kunststoffhülse auf ein Metallrohr aufgepreßt und die Anlageflächen von einer schrägen Schulter des Rohres gebildet ist. Das Rohr weist in diesem Fall eine Durchmesserverringerung auf, die die schräge Schulter bildet. Dabei kann der schräg verlaufende Bereich sowohl geradlinig als auch leicht gebogen verlaufen. Auch hier wird eine besonders große Anlagefläche gebildet, so daß die auftretenden Kräfte gering gehalten werden können bzw. die auftretenden Biegemomente günstig abgefangen werden können. Diese Art der Ausbildung der Kupplungsbuchse mit Hilfe einer auf einem Metallrohr aufgepreßten Kunststoffhülse ist besonders dann von Interesse, wenn die Kupplung an einem Verlängerungsstiel angebracht werden soll, der dann vorzugsweise aus Metall besteht.

Zur Verbesserung der Befestigung zwischen dem Metallrohr und der Kunststoffhülse kann vorgesehen sein, daß das Metallrohr an seiner Außenseite in seinem Endbereich eine widerhakenartige Profilierung aufweist. Die Profilierung kann so ausgebildet sein, daß sie bei der Herstellung das Aufpressen der Kunststoffhülse durch eine Schrägfläche erleichtert, während der sich daran anschließende widerhakenartige Teil zu einer sauberen und unlösbaren Verbindung führt.

Die Erfindung sieht vor, daß die Verdrehsicherung von flachen, im Querschnitt etwa rechteckigen Stegen gebildet sein kann, deren freie Enden abgeschrägt verlaufen. Diese in Längsrichtung der Kupplung gesehen rechteckigen Stege bilden eine besonders günstige Verdrehsicherung, da sie nur an ihren Stirnkanten des Querschnitts Verdrehkräfte aufnehmen, und aufgrund ihrer gegenüber ihrer Höhe relativ großen Breite diese Drehkräfte gut aufnehmen können. Der abgeschrägte Verlauf der freien Enden kann dazu dienen, das Einsetzen des Nippels der ebenfalls mit einer Verdrehsicherung ausgestattet ist, zu erleichtern.

Die Erfindung sieht vor, daß die Kunststoffhülse Griffmulden aufweisen kann, die winkelmäßig übereinstimmend mit den Stegen der Verdrehsicherung angeordnet sind. Das Anbringen der Griffmulden bedeutet eine Verringerung der Dicke der Kunststoffhülse, die durch die Anbringung der Stege in Übereinstimmung mit den Griffmulden wieder beseitigt wird, so daß die Kunststoffhülse überall im wesentlichen die gleiche Dicke und damit die gleiche Festigkeit aufweist.

Es kann vorgesehen sein, daß auch die die Anlageflächen bildenden Rippen in Verlängerung der Stege der Verdrehsicherung angeordnet sind bzw. einstückig in diese übergehen. Auch in diesem Fall wird die Stabilität der Kupplungsbuchse erhöht, ohne daß die Herstellung erschwert wird.

Die Erfindung schlägt vor, daß der Abstand der Anlageflächen vom freien Ende der Kupplungsbuchse mindestens etwa doppelt so groß sein kann, vorzugsweise mindestens etwa drei mal so groß, wie der Durchmesser der Kupplungsbuchse. Auf diese Weise wird eine günstige Hebelübersetzung geschaffen, so daß die auftretenden Biegemomente abgefangen werden können.

Die Erfindung schlägt ebenfalls einen Nippel zur Verbindung eines wasserführenden Rohres mit einer Kupplungsbuchse vor, wobei der Nippel eine Überwurfmutter mit einem Innengewinde und erfindungsgemäß eine Anlagefläche für eine Dichtung, mindestens eine etwa konische Anlagefläche im Bereich seines freien Endes sowie eine von dem Rohr durchsetzte Nippelhülse aufweist, die in axialem Abstand von der konischen Anlagefläche des Nippels angeordnet ist und an deren kupplungsseitigem Ende eine Verdrehsicherung angeordnet ist. Dieser Nippel kann insbesondere mit einer von der Erfindung vorgeschlagenen Kupplung zusammenwirken. Auch hier wird erreicht, daß die auftretenden Biegemomente günstig abgefangen werden können. Es kann vorgesehen sein, daß die Anlagefläche durch das freie, etwa kegelstumpfförmig ausgebildete Ende eines Metallrohres gebildet sein kann. Dieser Kegelstumpf öffnet sich von dem freien Ende des Nippels weg. Die Verdrehsicherung ist vorzugsweise so ausgebildet, daß sie mit der Verdrehsicherung der Kupplung möglichst spielfrei zusammenwirkt. Die Verdrehsicherung läßt sich bei der Kunststoffhülse besonders einfach einstückig mit dieser herstellen. Wiederum dient der axiale Abstand zwischen der Anlagefläche des Nippels und der Verdrehsicherung an der Nippelhülse dazu, einen günstigen Hebelarm für auftretende Biegemomente zu bilden. In Weiterbildung kann vorgesehen sein, daß die Nippelhülse vorzugsweise hinter der Verdrehsicherung eine Ringnut zur Aufnahme einer Dichtung aufweist. Die Anordnung der Nut hinter der Verdrehsicherung hat den Vorteil, daß beim Einsetzen des Nippels in die Kupplungsbuchse an der Ringdichtung in axialer Richtung nur wenig geschabt wird, und daß die Ringdichtung im wesentlichen immer an glatten Flächen anliegt, was ihrer Lebensdauer förderlich ist.

Die Erfindung schlägt weiterhin vor, daß der Nippel in axialem Abstand von seiner Anlagefläche eine zweite etwa kegelstumpfförmige Anlagefläche aufweist, die sich in Richtung auf das freie Ende des Nippels erweitert und mit einer entsprechenden Anlagefläche der Überwurfmutter zusammenwirkt. Während es bei Überwurfmuttern üblich ist, daß diese an einer Schulter angreifen, die etwa senkrecht zur Längsachse verläuft, greift bei der von der Erfindung vorgeschlagenen Anordnung die Überwurfmutter an einer Schrägfläche an, so daß beim Zusammenschrauben der Überwurfmutter des Nippels mit dem Gewinde der Kupplungsbuchse eine Zentrierung und damit eine spielfreie Festlegung des Rohres des Nippels an bzw. in der Kupplungsbuchse erfolgt. Durch stärkeres Anziehen der Überwurfmutter kann diese axiale Ausrichtung und spielfreie Festlegung verstärkt werden.

Auch bei dem Nippel kann vorgesehen sein, daß die Nippelhülse auf dem Metallrohr aufgepreßt ist.

Auch die Verdrehsicherung des Nippels ist mit Vorteil von flachen, im Querschnitt etwa rechteckigen Stegen gebildet. Dabei kann, wie bei der Kupplungsbuchse, vorgesehen sein, daß eine größere Anzahl derartiger Stege vorhanden ist, beispielsweise acht Stege. Je mehr Stege vorhanden sind, desto günstiger und schneller läßt sich das Einführen des Nippels in die Kupplungsbuchse bewerkstelligen.

Weitere Merkmale, Einzelheiten und Vorzüge der Erfindung ergeben sich aus den Ansprüchen, der folgenden Beschreibung bevorzugter Ausführungsformen sowie anhand der Zeichnung. Hierbei zeigen:

Fig. 1 einen Längsschnitt durch eine einstückig aus Kunststoff gebildete Kupplungsbuchse;

Fig. 2 die Außenansicht der Kupplungsbuchse nach Fig. 1 ;

Fig. 3 einen Längsschnitt durch eine abgeänderte Ausführungsform nach der Erfindung ;

Fig. 4 eine zur Hälfte geschnittene Ansicht eines mit den Kupplungsbuchsen nach Fig. 1 bis 3 zusammenwirkenden Nippels ;

Fig. 5 einen Längsschnitt durch eine hergestellte Verbindung zwischen einer Kupplungsbuchse und einem Nippel ;

Fig. 6 einen Schnitt etwa nach Linie VI-VI in Fig. 1.

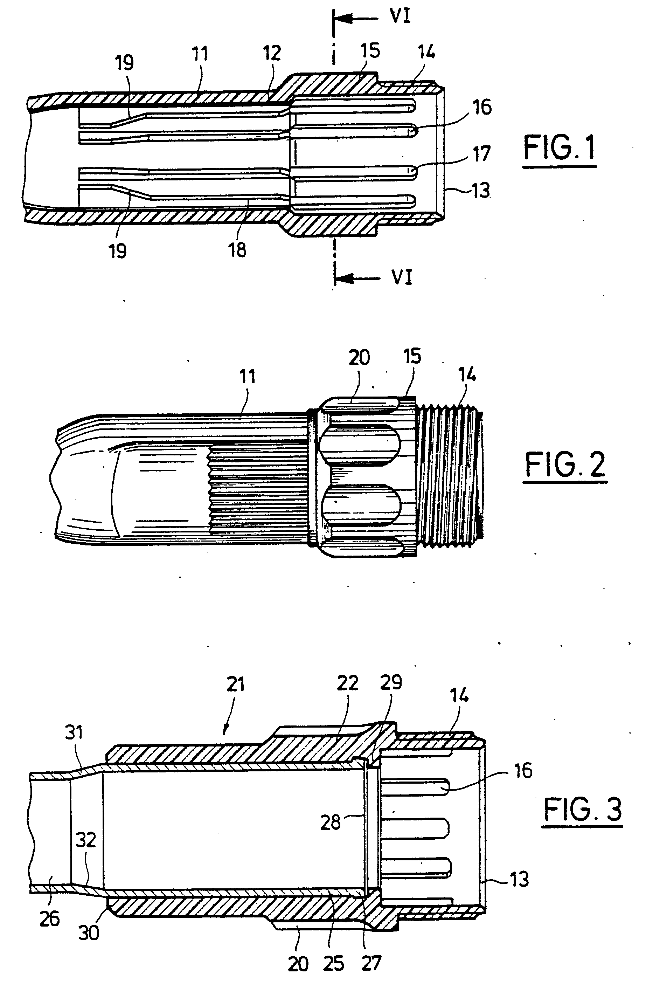

Fig. 1 zeigt einen Längsschnitt durch die Kupplungsbuchse 11. Die Kupplungsbuchse 11 besteht bei dem dargestellten Ausführungsbeispiel aus einer Kunststoffhülse 12, die im Bereich ihres freien Endes 13 an ihrer Außenseite ein Außengewinde 14 aufweist. Hinter dem Gewinde 14 vergrößert sich der Durchmesser der Kunststoffhülse 12 etwas, so daß hier ein Griffteil 15 gebildet ist. Hinter dem Griffteil 15 verringert sich der Durchmesser wieder.

An der Innenseite der Kunststoffhülse 12 sind, kurz hinter dem freien Ende 13 beginnend, insgesamt acht Stege 16 einstückig angeformt, von denen in Fig. 1 vier zu sehen sind. Im Querschnitt, d. h. vom freien Ende 13 her gesehen, sind die Stege 16 flach und rechteckig, wobei die kürzere Seite des Rechtsecks radial gerichtet ist. Die Stege 16 sind äquidistant über den Umfang verteilt, ihre jeweiligen in Fig. 1 nach rechts gerichteten Enden 17 verlaufen abgeschrägt, so daß ein Einschieben eines Kupplungsnippels erleichtert wird.

Etwa im Bereich des Übergangs zwischen dem Griffteil 15 und dem Teil wieder verringerten Durchmessers gehen die Stege 16 einstückig in Rippen 18 über. Die Rippen 18 besitzen eine größere Höhe und eine kleinere Breite als die Stege 16. Die Rippen 18 gehören nicht mehr zur Verdrehsicherung. In einer Entfernung vom freien Ende 13 der Kupplungsbuchse 11, die etwa das 2 1/2-fache des Innendurchmessers des äußeren Endes der Kupplung beträgt, vergrößert sich die Höhe der Rippen 18, so daß hier eine schräg verlaufende Anlagefläche 19 bei jeder Rippe 18 gebildet ist. Die Anlageflächen 19 sind so angeordnet, daß sich der Durchmesser in Richtung auf das freie Ende vergrößert. Ein mit einer entsprechenden kegelstumpfförmigen Fläche versehener Nippel kann daher an diesen Anlageflächen 19 aufgleiten und zentriert werden.

Fig. 2 zeigt nun die Außenansicht der Kupplungsbuchse 11 nach Fig. 1. Deutlich ist zu sehen, daß der Griffteil 15 einen größeren Durchmesser aufweist als das Außengewinde 14 und daß der Griffteil 15 mit Griffmulden 20 versehen ist. Es sind insgesamt acht Griffmulden 20 vorhanden, von denen in Fig. 2 nur vier zu sehen sind. Das Außengewinde 14 ist nur schematisch dargestellt. Die Griffmulden 20 sind so angeordnet, daß an jeder Stelle des Umfangs, an der an der Innenseite ein Steg 16 ausgebildet ist, auch eine Griffmulde 20 vorhanden ist. Dadurch verringert sich die Dicke der Kunststoffhülse 12 nicht.

Fig. 3 zeigt einen der Fig. 1 ähnlichen Längsschnitt durch eine abgeänderte Ausführungsform. Diese Ausführungsform ist insbesondere dann von Interesse, wenn zwischen der Kupplungsbuchse 21 und dem zugehörigen Gerät ein größerer Abstand vorhanden sein soll, der durch ein Metallrohr überbrückt wird. Die Kupplungsbuchse 21 in Fig. 3 enthält wiederum wie bei der Ausführungsform nach Fig. 1 eine Kunststoffhülse 22, die an ihrem freien Ende 13 ein Außengewinde 14 aufweist. An der Innenseite weist die Kunststoffhülse 22 wiederum mehrere Stege 16 auf, deren Anordnung und Ausbildung den Stegen 16 in Fig. 1 entspricht.

Die Kunststoffhülse 22 ist auf das Ende 25 eines Metallrohres 26 aufgepreßt, wobei das Ende 25 an seiner Außenseite eine widerhakenartige Profilierung 27 aufweist. Die durch die Profilierung 27 gebildete scharfe Kante führt zu einer verstärkten Festlegung des Metallrohres 26 in der Kunststoffhülse 12. Das Ende 25 stößt mit seiner Stirnseite 28 an einer Schulter 29 der Kunststoffhülse 22 an, so daß ein Anschlag für das Metallrohr 26 gegeben ist. Die Schulter 29 verläuft ringförmig an der Innenseite der Kunststoffhülse 22 und trennt den Bereich des Metallrohres 26 von dem Bereich der Stege 16, die die Verdrehsicherung bilden. Die Kunststoffhülse 22 weist an ihrer Außenseite wiederum Griffmulden 20 auf, mit deren Hilfe die Kupplungsbuchse 21 leichter bedient werden kann.

Das Metallrohr 26 weist im Bereich des hinteren Endes 30 der Kunststoffhülse 22 eine kegelstumpfförmige Zone 31 auf, die zu einer Verringerung des Durchmessers außerhalb der Kunststoffhülse 22 führt. Diese kegelstumpfförmige Zone 31 bildet auf ihrer Innenseite eine Anlagefläche 32, ähnlich wie die Anlagefläche 19 bei der Ausführungsform nach Fig. 1, wobei in diesem Fall die Anlagefläche 32 ohne Unterbrechungen um den gesamten Umfang herumläuft und dadurch besonders groß ausgebildet ist. Das bedeutet, daß auftretende Kräfte auf eine große Fläche verteilt und dadurch entstehende Drücke klein gehalten werden. Ähnlich wie bei der Ausführungsform nach Fig. 1 liegt die Anlagefläche 32 in maximalem Abstand von dem freien Ende 13 der Kunststoffhülse 22, so daß ein günstiges Hebelverhältnis für auftretende Biegemomente geschaffen wird. Die Anlagefläche 32 ist kegelstumpfförmig ausgebildet, sie könnte jedoch auch im Längsschnitt leicht gebogen verlaufen. In beiden Fällen wird eine exakte Zentrierung und spielfreie Festlegung eines Kupplungsnippels erreicht.

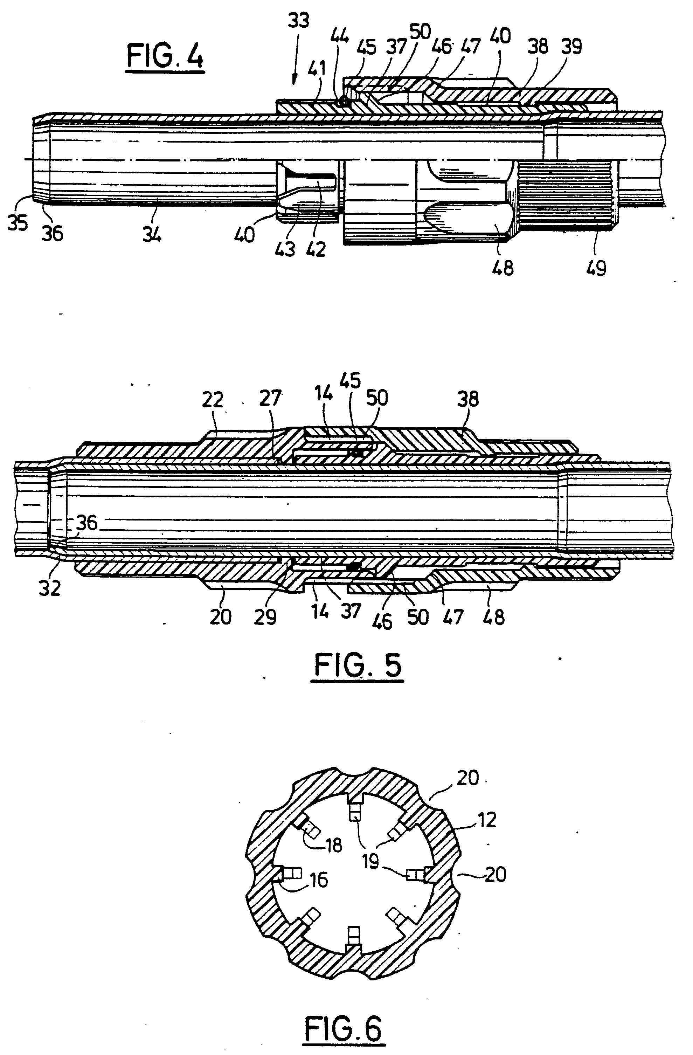

Fig. 4 zeigt nun, teilweise im Schnitt, einen Nippel 33, wie er in Zusammenhang mit der Kupplung mit Vorteil verwendbar ist. Die obere Hälfte der Fig. 4 zeigt den Nippel 33 im Schnitt, die untere Hälfte zeigt ihn in der Ansicht. Der Nippel 33 enthält ein Metallrohr 34, das an seinem freien Ende 35 eine etwa kegelstumpfförmige Anlagefläche 36 aufweist. Die Anlagefläche 36 könnte wiederum im Längsschnitt leicht gekrümmt verlaufen.

Auf dem Metallrohr 34 mit Abstand von dessen freiem Ende 35 ist eine Kunststoffhülse 37 aufgepreßt, die eine Überwurfmutter 38 aufweist. Die Überwurfmutter 38 ist gegenüber der Kunststoffhülse 37 in Längsrichtung verschiebbar und in Drehrichtung frei drehend ausgebildet. Die Längsverschiebbarkeit wird durch eine an der Innenseite der Überwurfmutter angeordnete Rippe 39 und eine breite Flachnut 40 an der Außenseite der Nippelhülse 37 begrenzt.

Im Bereich ihres dem freien Ende 35 des Metallrohres 34 zugewandten Endes 40 weist die Nippelhülse 37 einen etwa zylindrischen Bereich 41 auf, in dem mehrere von links her offene und rechts geschlossene Schlitze 42 ausgebildet sind. Die Schlitze 42 sind zum freien Ende 40 hin trichterförmig erweitert. Zwischen den Schlitzen 42 sind dadurch Stege 43 gebildet, deren Seitenkanten über etwa zwei Drittel ihrer Länge parallel zur Längsachse verlaufen, während im vorderen Bereich sich die Breite der Stege 43 verringert.

Direkt hinter dem zylindrischen Bereich 41 mit den Stegen 43 ist eine Nut 44 zur Aufnahme einer Ringdichtung 45 angeordnet.

Hinter der Nut 44 mit der Ringdichtung 45 weist die Nippelhülse 37 eine kegelstumpfartige Schrägfläche 46 auf, die derart ausgebildet ist, daß sich der Durchmesser der Nippelhülse 37 nach rechts, d. h. vom freien Ende 35 des Nippels weg, verringert.

Die Überwurfmutter 38 weist an ihrer Innenseite ebenfalls eine Schrägfläche 47 auf, die der Schrägfläche 46 der Nippelhülse 37 entsprechend ausgebildet ist. Bei Linksverschiebung der Überwurfmutter 38 gelangen die beiden Schrägflächen 46, 47 aneinander zur Anlage, so daß also die beiden Schrägflächen Anlageflächen bilden.

Die Überwurfmutter 38 weist an ihrer Außenseite Griffmulden 48 sowie an ihrem hinteren Ende eine Riefelung 49 auf.

Die Anlageflächen 46, 47 sind mit großem Abstand von dem freien Ende 35 des Metallrohrs 34 angeordnet.

Fig. 5 zeigt nun den in die Kupplungsbuchse nach Fig. 3 eingesetzten Nippel im Längsschnitt, wobei in der oberen Hälfte der Fig. 5 die Überwurfmutter angezogen ist, während in der unteren Hälfte die Überwurfmutter noch gelöst ist.

Der Außendurchmesser des Metallrohres 34 des Kupplungsnippels ist etwas kleiner als der Innendurchmesser des Metallrohres 26 innerhalb der Kunststoffhülse 22, wobei das vorhandene Spiel so gewählt ist, daß sich ein leichtes Einsetzen ermöglicht. Die Anlagefläche 36 am freien Ende des Metallrohres 34 gelangt zur Anlage an der Anlagefläche 32 des Metallrohres 26 der Kupplungsbuchse 21, während die Stege 43 zwischen die Stege 16 eingesetzt sind. Der Abstand zwischen den Stegen 16 ist daher etwa der Breite der Stege 43 gleich, während umgekehrt die Breite der Schlitze 42 des Kupplungsnippels 33 der Breite der Stege 16 der Kupplungsbuchse 21 bzw. 11 entspricht. Die Verdrehsicherung wird also vollständig von den Stegen 16 mit ihren Zwischenräumen und den Stegen 43 mit den Schlitzen 42 übernommen.

Die Ringdichtung 45 gelangt zur Anlage an der Innenseite des vorderen Endes der Kunststoffhülse 22 der Kupplungsbuchse, was möglich ist, da die Vorderseite der Stege 16 einen gewissen Abstand vom freien Ende 13 der Kunststoffhülse 22 aufweist.

Wird nun die Überwurfmutter 38, siehe untere Hälfte der Fig. 5, mit ihrem Innengewinde 50 in das Außengewinde 14 der Kupplungsbuchse eingeschraubt, so gelangt ihre Anlagefläche 47 zur Anlage an der Anlagefläche 46 der Nippelhülse 37, so daß bei weiterem Einschrauben der Nippel 33 in das Innere der Kupplungsbuchse 21 geschoben wird. Bei Festdrehen der Überwurfmutter erfolgt eine Zentrierung zwischen den Anlageflächen 32 und 36 einerseits und den Anlageflächen 46 und 47 andererseits, so daß eine exakte axiale Festlegung des Nippels und der Kupplungsbuchse erfolgen. Sämtliche auftretenden Biegemomente werden von diesen Anlageflächen aufgenommen, die, wie sich insbesondere aus Fig. 5 ergibt, einen großen Abstand voneinander aufweisen. Die Verdrehsicherung ist von dieser Anlage vollständig getrennt. Von der Verdrehsicherung brauchen also nur Drehkräfte aufgenommen zu werden. Die Abdichtung der Kupplung erfolgt durch die Ringdichtung 45, die an der Kupplungsbuchse an einer glatten Anlagefläche anliegt.

Fig. 6 zeigt einen Schnitt durch die Kupplungshülse 12 in Fig. 1. Es ist zu sehen, daß insgesamt acht Griffmulden 20 vorhanden sind, und daß sowohl die Stege 16 als auch in deren Verlängerung die Rippen 18 an der Innenseite der Hülse dort angeordnet sind, wo an der Außenseite die Griffmulden 20 sind. Es tritt daher keine Dickenverminderung der Hülse im Bereich der Griffmulden 20 auf.

Die Kupplungsbuchse kann direkt an einem wasserverbrauchenden Gerät angebracht sein, beispielsweise einer Waschbürste. Es ist jedoch ebenfalls möglich, wie von der Erfindung vorgeschlagen wird, daß zum Anschluß eines wasserverbrauchenden Gerätes eine Stielverlängerung vorhanden ist, so daß die Kupplungsbuchse am einen Ende der Verlängerung und der Nippel am anderen Ende der Verlängerung angeordnet sind. Der Stiel wird durch das Metallrohr gebildet, das also nicht nur als Stiel, sondern auch als Wasserführung dient.

Es wird von der Erfindung vorgezogen, daß die Kupplungsbuchse an der Seite des wasserverbrauchenden Gerätes angeordnet ist, so daß die Wasserführung also bei der Ausführungsform nach Fig. 5 von rechts nach links verläuft, d. h. vom Nippel her in die Kupplungsbuchse. Dies ist jedoch nicht zwingend, es könnte selbstverständlich auch in umgekehrter Richtung die Wasserströmung erfolgen.

**Patentansprüche**

1. Kupplungsbuchse zur Verbindung eines zu einem wasserverbrauchenden Gerät führenden Rohres (26) mit einem wasserführenden Rohr (34) mit Hilfe eines Kupplungsnippels (33), bei der die in Längsrichtung hohle Kupplungsbuchse (11, 21) an ihrer Außenseite ein Gewinde (14) und an ihrer Innenseite mindestens eine Anlagefläche (19, 32) für den Kupplungsnippel (33) aufweist, dadurch gekennzeichnet, daß die Kupplungsbuchse (11, 21) an ihrer Innenseite eine Auflagefläche für eine Dichtung (45) und eine im Bereich ihres freien Endes (13) angeordnete Verdrehsicherung für den mit ihr zu verbindenden Kupplungsnippel (33) aufweist und die Anlagefläche (19, 32) etwa auf einer sich zum freien Ende (13) der Kupplungsbuchse (11, 21) hin öffnenden Kegelstumpffläche liegt und in axialem Abstand vom freien Ende der Kupplungsbuchse (11, 21) angeordnet ist.

2. Kupplungsbuchse nach Anspruch 1, dadurch gekennzeichnet, daß die Kupplungsbuchse (11) einstückig mit dem zu einem wasserverbrauchenden Gerät führenden Rohr ausgebildet ist.

3. Kupplungsbuchse nach Anspruch 1 oder 2, dadurch gekennzeichnet, daß die Auflagefläche zur Anlage der Dichtung (45) im Bereich des freien Endes (13) der Kupplungsbuchse (11, 21) angeordnet ist.

4. Kupplungsbuchse nach Anspruch 3, dadurch gekennzeichnet, daß die Auflagefläche zur Anlage der Dichtung (45) vor der Verdrehsicherung angeordnet ist.

5. Kupplungsbuchse nach einem der vorhergehenden Ansprüche, dadurch gekennzeichnet, daß sie eine Hülse (12, 22) aus Kunststoff aufweist, an der die Verdrehsicherung einstückig angeformt ist.

6. Kupplungsbuchse nach Anspruch 5, dadurch gekennzeichnet, daß mindestens eine Anlagefläche (19) einstückig mit der Kunststoffhülse (22) ausgebildet ist.

7. Kupplungsbuchse nach einem der vorhergehenden Ansprüche, dadurch gekennzeichnet, daß mehrere gleichmäßig über den Umfang verteilte Anlageflächen (19) vorgesehen sind, die an Rippen (18) gebildet sind.

8. Kupplungsbuchse nach Anspruch 5, dadurch gekennzeichnet, daß die Kunststoffhülse (22) auf ein Metallrohr (26) aufgepreßt und die Anlagefläche (32) von einer schrägen Schulter (31) des Rohrs (26) gebildet ist.

9. Kupplungsbuchse nach Anspruch 8, dadurch gekennzeichnet, daß das Metallrohr (26) an der Außenseite in seinem Endbereich eine widerhakenartige Profilierung (27) aufweist.

10. Kupplungsbuchse nach einem der vorhergehenden Ansprüche, dadurch gekennzeichnet, daß die Verdrehsicherung von flachen, im Querschnitt etwa rechteckigen Stegen (16) gebildet ist, deren freie Enden ggf. abgeschrägt verlaufen.

11. Kupplungsbuchse nach Anspruch 10, dadurch gekennzeichnet, daß die Kunststoffhülse (12, 22) Griffmulden (20) aufweist, die übereinstimmend mit den Stegen (16) der Verdrehsicherung angeordnet sind, wobei ggf. die Rippen (18) in Verlängerung der Stege (16) der Verdrehsicherung angeordnet sind bzw. einstückig in diese übergehen.

12. Kupplungsbuchse nach einem der vorhergehenden Ansprüche, dadurch gekennzeichnet, daß der Abstand der Anlagefläche (19, 32) vom freien Ende (13) der Kupplungsbuchse (11, 21) mindestens etwa doppelt so groß, vorzugsweise mindestens etwa drei mal so groß ist wie der Durchmesser der Kupplungsbuchse (11, 21).

13. Nippel zur Verbindung eines wasserführenden Rohres (34) mit einer Kupplungsbuchse (11, 21), insbesondere nach einem der vorhergehenden Ansprüche, wobei der Nippel (33) eine Überwurfmutter (38) mit einem Innengewinde (50) aufweist, dadurch gekennzeichnet, daß der Nippel eine Anlagefläche für eine Dichtung (45) und mindestens eine etwa konische Anlagefläche (36), die im Bereich seines freien Endes (35) angeordnet ist, sowie eine von dem Rohr (34) durchsetzte Nippelhülse (37) aufweist, die in axialem Abstand von der konischen Anlagefläche (36) des Nippels (33) angeordnet ist und an deren kupplungsseitigem Ende (40) eine Verdrehsicherung angeordnet ist.

14. Nippel nach Anspruch 13, dadurch gekennzeichnet, daß die Anlagefläche (36) durch das freie etwa kegelstumpfförmig ausgebildete Ende (35) des vorzugsweise aus Metall bestehenden Rohrs (34) gebildet ist.

15. Nippel nach Anspruch 13 oder 14, dadurch gekennzeichnet, daß die Nippelhülse (37) hinter der Verdrehsicherung eine Ringnut (44) zur Aufnahme einer Dichtung (45) aufweist.

16. Nippel nach einem der Ansprüche 13 bis 15, dadurch gekennzeichnet, daß der Nippel (33) in axialem Abstand von seinem freien Ende (35) eine kegelstumpfförmige Anlagefläche (46) aufweist, die sich in Richtung auf das freie Ende (35) des Nippels (33) erweitert und mit einer entsprechenden Anlagefläche (47) der Überwurfmutter (38) zusammenwirkt.

17. Nippel nach einem der Ansprüche 13 bis 16, dadurch gekennzeichnet, daß die Nippelhülse (37) auf das Metallrohr (34) aufgepreßt ist.

18. Nippel nach einem der Ansprüche 13 bis 17, dadurch gekennzeichnet, daß die Verdrehsicherung von flachen, im Querschnitt etwa rechteckigen Stegen (43) gebildet ist.

## Claims

1. Coupling for connecting a pipe (26) leading to a water-consuming appliance to a water-carrying pipe (34) with the aid of a coupling nipple (33) in which the longitudinally hollow coupling (11, 21) is provided on its outside with a thread (14) and on its inside with at least one engagement surface (19, 32) for the coupling nipple (33), characterized in that the coupling (11, 21) is provided on its inside with a bearing surface for a packing (45) and a rotation prevention device arranged in the vicinity of its free end (13) for the coupling nipple (33) to be connected thereto and the engagement surface (19, 32) is located roughly on a frustum surface opening towards the free end (13) of coupling (11, 21) and is axially

spaced from the free end of the latter.

2. Coupling according to claim 1, characterized in that the coupling (11) is constructed in one piece with the pipe leading to a water-consuming appliance.

3. Coupling according to claims 1 or 2, characterized in that the bearing surface for the engagement of the packing (45) is located in the vicinity of the free end (13) of coupling (11, 21).

4. Coupling according to claim 3, characterized in that the bearing surface for the engagement of packing (45) is positioned upstream of the rotation prevention device.

5. Coupling according to one of the preceding claims, characterized in that it has a plastics sleeve (12, 22), on which is shaped in one piece the rotation prevention device.

6. Coupling according to claim 5, characterized in that at least one engagement surface (19) is constructed in one piece with the plastics sleeve (22).

7. Coupling according to one of the preceding claims, characterized in that there are several engagement surfaces (19) which are uniformly distributed over the circumference and formed on ribs (18).

8. Coupling according to claim 5, characterized in that the plastics sleeve (22) is pressed onto a metal pipe (26) and the engagement surface (32) is formed by a sloping shoulder (31) of pipe (26).

9. Coupling according to claim 8, characterized in that the metal pipe (26) has on the end of its outside a barb-like profiling (27).

10. Coupling according to one of the preceding claims, characterized in that the rotation prevention device is formed by flat, cross-sectionally roughly rectangular webs (16), whose free ends are optionally bevelled.

11. Coupling according to claim 10, characterized in that the plastics sleeve (12, 22) has gripping depressions (20), which are arranged in coinciding manner with the webs (16) of the rotation prevention device and optionally the ribs (18) are arranged in the extension of the webs (16) of the rotation prevention device or pass in one piece into the same.

12. Coupling according to one of the preceding claims, characterized in that the distance of the engagement surface (19, 32) from the free end (13) of coupling (11, 21) is at least approximately twice as large and preferably at least approximately three times as large as the diameter of coupling (11, 21).

13. Nipple for connecting a water-carrying pipe (34) to a coupling (11, 21), particularly according to one of the preceding claims, in which the nipple (33) has a cap nut (38) with an internal thread (50), characterized in that the nipple has an engagement surface for a packing (45) and at least one roughly conical engagement surface (36), which is located in the vicinity of its free end (35), as well as a nipple sleeve (37) traversed by pipe (34) and which is axially spaced from the conical engagement surface (36) of nipple (33) and on whose coupling side end (40) is arranged a rotation prevention device.

14. Nipple according to claim 13, characterized in that the engagement surface (36) is formed by the free, roughly frustum-shaped end (35) of the preferably metallic pipe (34).

15. Nipple according to claims 13 or 14, characterized in that behind the rotation prevention device the nipple sleeve (37) has a circular groove (44) for receiving a packing (45).

16. Nipple according to one of the claims 13 to 15, characterized in that the nipple (33) has a frustum-shaped engagement surface (46) axially spaced from its free end (35) and which widens in the direction of the free end (35) of nipple (33) and cooperates with a corresponding engagement surface (47) of the cap nut (38).

17. Nipple according to one of the claims 13 to 16, characterized in that the nipple sleeve (37) is pressed onto the metal pipe (34).

18. Nipple according to one of the claims 13 to 17, characterized in that the rotation prevention device is formed by flat, cross-sectionally roughly rectangular webs (43).

## Revendications

1. Pièce de raccord pour le raccordement d'un tube (26) aboutissant à un appareil consommateur d'eau avec un tube d'amenée d'eau (34) à l'aide d'un raccord fileté (33), dans laquelle la pièce de raccord (11, 21) creuse dans le sens longitudinal comporte à sa partie extérieure un filet (14) et à sa partie intérieure au moins une surface d'appui (19, 32) pour l'élément de raccord fileté (33), caractérisée en ce que la pièce de raccord (11, 21) présente à sa partie intérieure une surface d'appui pour un joint d'étanchéité (45) et un dispositif de blocage de rotation prévu dans la zone de son extrémité libre (13) pour le raccord fileté (33) qui doit lui être relié, et que la surface d'appui (19, 32) se trouve substantiellement sur une surface tronconique s'évasant en direction de l'extrémité libre (13) de la pièce de raccord (11, 21) et est prévue à une distance en sens axial par rapport à l'extrémité libre de la pièce de raccord (11, 21).

2. Pièce de raccord selon la revendication 1, caractérisée en ce que l'élément de raccord (11) est construit d'une seule pièce avec le tube menant à un appareil consommateur d'eau.

3. Pièce de raccord selon la revendication 1 ou 2, caractérisée en ce que la surface d'appui destinée à l'installation du joint d'étanchéité (45) est prévue dans la zone de l'extrémité libre (13) de l'élément de raccord (11, 21).

4. Pièce de raccord selon la revendication 3, caractérisée en ce que la surface d'appui destinée à recevoir le joint d'étanchéité (45) est prévue devant le système de blocage de rotation.

5. Pièce de raccord selon l'une des revendications précédentes, caractérisée en ce qu'elle comporte une douille (12, 22) en matière synthétique sur laquelle le dispositif de blocage de rotation est formé en une seule pièce.

6. Pièce de raccord selon la revendication 5, caractérisée en ce qu'au moins une surface d'appui (19) est constituée en une seule pièce avec la douille en matière synthétique (22).

7. Pièce de raccord selon l'une des revendications précédentes, caractérisée en ce qu'il est prévu plusieurs surfaces d'appui (19) régulièrement réparties sur le pourtour et formées par des nervures (18).

8. Pièce de raccord selon la revendication 5, caractérisée en ce que la douille en matière synthétique (22) est pressée sur un tube métallique (26) et que la surface d'appui (32) est formée par un épaulement oblique (31) du tube (26).

9. Pièce de raccord selon la revendication 8, caractérisée en ce que le tube métallique (26) présente à sa partie extérieure, dans la zone extrême, un profilage en crochet (27).

10. Pièce de raccord selon l'une des revendications précédentes, caractérisée en ce que le blocage de rotation est constitué par des cannelures (16) plates, de section environ rectangulaire, dont les extrémités libres s'étendent éventuellement obliquement.

11. Pièce de raccord selon la revendication 10, caractérisée en ce que la douille en matière synthétique (12, 22) présente des creux de préhension (20) qui correspondent aux cannelures (16) du dispositif de blocage de rotation, les nervures (18) étant éventuellement prévues dans le prolongement des cannelures (16) ou constituant un prolongement de ces cannelures en une seule pièce.

12. Pièce de raccord selon l'une des revendications précédentes, caractérisée en ce que la distance entre les surfaces d'appui (19, 32) et l'extrémité libre (13) de l'élément de raccord (11, 21) est au moins égale à deux fois, de préférence au moins trois fois le diamètre de l'élément de raccord (11, 21).

13. Elément fileté pour le raccordement d'un tube d'amenée d'eau (34) à un élément de raccord (11, 21), en particulier selon l'une des revendications précédentes, l'élément fileté (33) comportant un écrou d'accouplement (38) possédant un filet intérieur (50), caractérisé en ce que l'élément comporte une surface d'appui pour un joint d'étanchéité (45) et au moins une surface d'appui substantiellement conique (36) prévue dans la zone de son extrémité libre (35), ainsi qu'une douille (37) traversée par le tube (34), qui est prévue à distance axiale de la surface d'appui conique (36) de l'élément (33) et comporte, à son extrémité (40) du côté du raccord, un dispositif de blocage de rotation.

14. Raccord fileté selon la revendication 13, caractérisé en ce que la surface d'appui (36) est formée par l'extrémité libre (35) de forme substantiellement tronconique du tube (34) de préférence métallique.

15. Raccord fileté selon la revendication 13 ou 14, caractérisé en ce que la douille du raccord fileté (37) présente, derrière le dispositif de blocage de rotation, une rainure annulaire (44) destinée à recevoir un joint d'étanchéité (45).

16. Raccord fileté selon l'une des revendications 13 à 15, caractérisé en ce que l'élément de raccord (33) présente, axialement distante de l'extrémité libre (35), une surface d'appui tronconique (46) qui s'évase en direction de l'extrémité libre (35) de l'élément de raccord (33) et s'associe à une surface d'appui correspondante (47) de l'écrou d'accouplement (38).

17. Raccord fileté selon l'une des revendications 13 à 16, caractérisé en ce que la douille (37) du raccord fileté est pressée sur le tube métallique (34).

18. Raccord fileté selon l'une des revendications 13 à 17, caractérisé en ce que le dispositif de blocage de rotation consiste en nervures (43) plates, de section substantiellement rectangulaire.

FIG.1

FIG.2

FIG.3

FIG. 4

FIG. 5

FIG.6